(19) Europäisches Patentamt
European Patent Office
Office européen des brevets

(11) **EP 2 399 960 B1**

(12) **EUROPEAN PATENT SPECIFICATION**

(45) Date of publication and mention
of the grant of the patent:
**13.04.2016 Bulletin 2016/15**

(21) Application number: **11170645.3**

(22) Date of filing: **21.06.2011**

(51) Int Cl.:
*C08L 71/02* (2006.01)   *C09D 171/02* (2006.01)
*C07C 43/00* (2006.01)   *C07C 43/11* (2006.01)
*C09D 5/02* (2006.01)   *C09D 7/00* (2006.01)
*C09D 133/08* (2006.01)   *C08K 5/06* (2006.01)
*C09D 163/00* (2006.01)

(54) **COALESCENT FOR AQUEOUS COMPOSITIONS**

KOALESZENT FÜR WÄSSRIGE ZUSAMMENSETZUNGEN

AGENT DE COALESCENCE POUR COMPOSITIONS AQUEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.06.2011 US 494572 P**
**26.04.2011 US 478973 P**
**25.06.2010 US 398499 P**

(43) Date of publication of application:
**28.12.2011 Bulletin 2011/52**

(73) Proprietor: **Dow Global Technologies LLC**
**Midland, MI 48674 (US)**

(72) Inventors:
• **Donate, Felipe Augusto**
**Midland, MI Michigan 48642 (US)**
• **Emelie, Brigitte Rose**
**F67840 Kilstett (FR)**
• **Michalski, Eva-Maria**
**76547 Sinzheim (DE)**

(74) Representative: **Houghton, Mark Phillip et al**
**Patent Outsourcing Limited**
**1 King Street**
**Bakewell, Derbyshire DE45 1DZ (GB)**

(56) References cited:
**US-A- 3 806 460**    **US-A- 3 829 387**
**US-A1- 2003 148 120**    **US-A1- 2004 259 753**
**US-A1- 2010 130 644**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to an aqueous coating composition including an aqueous polymeric dispersion and a coalescent composition, and to a method for providing a coating.

Compliance with the increasingly stringent Volatile Organic Compound (VOC) regulations around the world is a major challenge for the aqueous formulation chemists today. In most coating formulations the use of an organic solvent or an external plasticizer is required to facilitate film formation. One of the major contributors to the VOC in a coating formulation is the coalescent in the formulation. The European Union has published the 2010 VOC regulations for different types of coating formulations and also has defined the boiling point limit as 250 °C for VOC. Similarly, in China VOC is defined as organic compounds having a boiling point below 250 °C. The present invention serves to provide coalescent compositions that are particularly suitable for use in aqueous compositions such as aqueous decorative and protective coatings for various substrates which coatings provide a sought-after balance of coatings properties, particularly including desirable application properties such as, for example, open time and flow, and facile film formation and hardness development while maintaining desirable dry coatings properties, particularly wherein the aqueous compositions contain low or no VOC and advantageously low toxicity.

United States patent application US 2010/130,644 discloses adducts of ethylene oxide and/or propylene oxide with fatty acids and their use as coalescents. U.S. Patent No. 3,806,460 discloses cleaner compositions. U.S. Patent No. 3,829,387 discloses caustic cleaner compositions.

U.S. Patent No. 5,186,744 discloses coalescing agents for water-borne coating applications including propoxylated propylene glycol tert-butyl ether and one or more organic solvents. Improvements in the VOC/coatings properties/toxicity profile of previously disclosed coalescents are still desired.

In a first aspect of the present invention there is provided an aqueous coating composition comprising an aqueous polymeric dispersion and from 0.1% to 40% by weight, based on the weight of aqueous polymeric dispersion solids, a coalescent composition; said coalescent composition comprising from 20 to 80% by weight, based on the weight of said coalescent composition, alkylene glycol phenyl ether and from 80% to 20% by weight, based on the weight of said coalescent composition, dialkylene glycol phenyl ether; wherein said alkylene is selected from the group consisting of ethylene and propylene and said dialkylene is diethylene when said alkylene is ethylene and said dialkylene is dipropylene when said alkylene is propylene.

In a second aspect of the present invention there is provided a method for providing a coating comprising (a) forming the aqueous coating composition of the first aspect of the present invention; (b) applying said aqueous coating composition to a substrate; and (c) drying, or allowing to dry, said applied aqueous coating composition.

The aqueous coating composition of the present invention includes an aqueous polymeric dispersion and from 0.1% to 40% by weight, based on the weight of aqueous polymeric dispersion solids, a coalescent composition. The coalescent composition includes from 20% to 80%, preferably from 25% to 60%, by weight, based on the weight of the coalescent composition, alkylene glycol phenyl ether and from 80% to 20%, preferably from 60% to 25%, by weight, based on the weight of the coalescent composition, dialkylene glycol phenyl ether; wherein the alkylene is selected from the group consisting of ethylene and propylene. When the alkylene is ethylene the dialkylene is diethylene and when the alkylene is propylene the dialkylene is dipropylene.

By "coalescent composition" is meant a composition that facilitates the film formation of an aqueous polymeric composition, particularly an aqueous coating composition that includes a dispersion of polymer in an aqueous medium such as, for example, an emulsion polymer, i.e., a polymer prepared by emulsion polymerization techniques.

The coalescent composition may be formed by known methods such as the reaction of alkylene glycol phenyl ether with alkylene oxide. The coalescent composition may also be prepared by blending, for example, ethylene glycol phenyl ether and diethylene glycol phenyl ether, or by blending mixtures of alkylene glycol phenyl ether and dialkylene glycol phenyl ether with one or the other of the compounds or with other mixtures compositionally appropriate to form the desired coalescent composition. Such blending is typically carried out in a simple mixing tank with agitation.

In one embodiment when the MFFT of the aqueous polymeric dispersion is from -20°C to 30°C, from 0.1% to 5% coalescent composition, by weight based on the weight of aqueous polymeric dispersion solids, is used.

The minimum film formation temperature ("MFFT") of the aqueous polymeric dispersion is from -20 °C to 125 °C, preferably from -20 °C to 30 °C. MFFTs of the aqueous polymeric dispersion herein are those measured using a Coesfeld Thermostair MFFT bar (Coesfeld GMBH).

The aqueous polymeric dispersion may be a dispersion of a polymer, oligomer, or prepolymer in an aqueous medium. In some embodiments the aqueous polymeric dispersion may be reactive before, during, or subsequent to film formation. By "aqueous medium" is meant herein a medium including at least 50%, by weight based on the weight of the medium, water. Typical aqueous polymeric dispersions are aqueous dispersions of epoxies, urethanes, acrylic polyols, polyesters, and hybrids of these and other chemistries; and emulsion polymers.

The emulsion polymer typically includes at least one copolymerized ethylenically unsaturated monomer such as, for example, styrene or substituted styrenes; vinyl toluene; butadiene; (meth)acrylonitrile; a (meth)acrylic ester monomer such as, for example, methyl (meth)acrylate, ethyl (meth)acrylate, butyl (meth)acrylate, hydroxyethyl (meth)acrylate, hydroxypropyl (meth)acrylate, and ureido-functional (meth)acrylates; vinyl acetate or other vinyl esters; vinyl monomers such as vinyl chloride, vinylidene chloride, and N-vinyl pyrollidone. The use of the term "(meth)" followed by another term such as (meth)acrylate, as used throughout the disclosure, refers to both acrylates and methacrylates.

In certain embodiments the emulsion polymer includes from 0% to 6%, or in the alternative, from 0% to 3 wt% or from 0% to 1%, by weight based on the weight of the polymer, of a copolymerized multi-ethylenically unsaturated monomer. It is important to select the level of multi-ethylenically unsaturated monomer so as to not materially interfere with film formation and integrity. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

The emulsion polymer includes from 0% to 15%, preferably from 1% to 7%, of a copolymerized monoethylenically-unsaturated acid monomer, based on the weight of the polymer. Acid monomers include carboxylic acid monomers such as, for example, (meth)acrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate, phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate.

The aqueous emulsion polymer is typically formed by an addition polymerization emulsion polymerization process as is known in the art. Conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. Polymerizable surfactants that include at least one ethylenically unsaturated carbon-carbon bond which can undergo free radical addition polymerization may be used. The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of the polymer. The monomer mixture may be added neat or as an emulsion in water. The monomer mixture may be added in a single addition or more additions or continuously over the reaction period using a uniform or varying composition. Additional ingredients such as, for example, free radical initiators, oxidants, reducing agents, chain transfer agents, neutralizers, surfactants, and dispersants may be added prior to, during, or subsequent to the monomer addition. Processes yielding polymodal particle size distributions such as those disclosed in US Patent Nos. 4,384,056 and 4,539,361, for example, may be employed.

The emulsion polymer may be formed in a multi-stage emulsion polymerization process. In the multi-stage emulsion polymerization process at least two stages different in composition are formed in sequential fashion. Preferred is a two-stage emulsion polymerization process in which the weight of the first stage polymer is from 10% to 90%, preferably from 30% to 70%, of the total weight of the first stage polymer and the second stage polymer, based on dry polymer weights. The polymerization techniques used to prepare aqueous multi-stage emulsion-polymers are well known in the art such as, for example, as disclosed in U.S. Patents No. 4,325,856; 4,654,397; and 4,814,373.

A multi-stage emulsion polymerization process usually results in the formation of at least two mutually incompatible polymer compositions, thereby resulting in the formation of at least two phases. The mutual incompatibility of two polymer compositions and the resultant multiphase structure of the polymer particles may be determined in various ways known in the art. The use of scanning electron microscopy using staining techniques to emphasize the difference between the phases, for example, is such a technique. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer may contain the same monomers, surfactants, initiation system, chain transfer agents, etc. as disclosed herein-above for the emulsion polymer. In the case of a multi-staged polymer particle the physical characteristics of the emulsion polymer such as for example, carbonyl-functional monomer content, acid monomer content, Tg, etc. for the purpose of this invention is to be calculated using the overall composition of the emulsion polymer without regard for the number of stages or phases therein. The emulsion polymer is also contemplated to be formed in two or more stages, the stages differing in molecular weight. Blending two different emulsion polymers is also contemplated.

The average particle diameter of the emulsion polymer particles is typically from 40 nanometers to 1000 nanometers, preferably from 40 nanometers to 300 nanometers. Particle sizes herein are those measured by dynamic light scattering on a Brookhaven BI-90 analyzer.

The aqueous coating composition is prepared by techniques which are well known in the coatings art. First, pigment(s), if any, are well dispersed in an aqueous medium under high shear such as is afforded by a COWLES (R) mixer or predispersed colorant(s), or mixtures thereof are used. Then the aqueous polymeric dispersion is added under low shear stirring along with the coalescent composition and other coatings adjuvants as desired. The aqueous coating composition may contain, in addition to the aqueous polymeric dispersion and pigment(s), film-forming or non-film-forming solution or other aqueous polymeric dispersion in an amount of 0% to 200% by weight of the aqueous polymeric dispersion, and conventional coatings adjuvants such as, for example, extenders, emulsifiers, coalescing agents other than the coalescent composition of the present invention, plasticizers, antifreezes, curing agents, buffers, neutralizers, thickeners, rheology modifiers, humectants, wetting agents, biocides, plasticizers, antifoaming agents, UV absorbers, fluorescent brighteners, light or heat stabilizers, biocides, chelating agents, dispersants, colorants, waxes, and water-repellants.

Examples of suitable pigments and extenders include titanium dioxide such as anatase and rutile titanium dioxide; zinc oxide; antimony oxide; iron oxide; magnesium silicate; calcium carbonate; organic and inorganic colored pigments; aluminosilcates; silica; various clays such as kaolin and delaminated clay; and lead oxide. It is also contemplated that the aqueous coating composition may also contain opaque polymer particles, such as, for example, Ropaque™ Opaque Polymers (Dow Chemical Co.). Also contemplated are encapsulated or partially encapsulated opacifying pigment particles; and polymers or polymer emulsions adsorbing or bonding to the surface of pigments such as titanium dioxide; and hollow pigments, including pigments having one or more voids.

The amounts of pigment and extender in the aqueous coating composition vary from a pigment volume concentration (PVC) of 0 to 85 and thereby encompass coatings otherwise described in the art, for example, as clear coatings, stains, flat coatings, satin coatings, semi-gloss coatings, gloss coatings, primers, textured coatings, and the like. The pigment volume concentration is calculated by the following formula:

$$\text{PVC (\%)} = \frac{\text{volume of pigment(s), + volume extender(s) x 100.}}{\text{total dry volume of paint}}$$

Volatile organic compound ("VOC") as used herein is based on the boiling point as defined in EU Directive 2004/42/CE, that is, a volatile organic compound is any organic compound having an initial boiling point of less than or equal to 250 °C measured at a standard pressure of 101.3 kPa

The solids content of the aqueous coating composition may be from 10% to 70% by volume. The viscosity of the aqueous coating composition may be from 50 centipoises to 50,000 centipoises, as measured using a Brookfield viscometer; viscosities appropriate for different application methods vary considerably.

The aqueous coating composition is typically applied to a substrate such as, for example, wood, metal, plastics, marine and civil engineering substrates, cementitious substrates such as, for example, concrete, stucco, and mortar, previously painted or primed surfaces, and weathered surfaces. The aqueous coating composition may be applied to a substrate using conventional coatings application methods such as, for example, brush, roller, curtain coater and spraying methods such as, for example, air-atomized spray, air-assisted spray, airless spray, high volume low pressure spray, and air-assisted airless spray.

Drying of the aqueous coating composition to provide a coating may be allowed to proceed under ambient conditions such as, for example, at 5 °C to 35°C. or the coating may be dried at elevated temperatures such as, for example, from 35 °C to 150°C.

| Abbreviations used | Homopolymer Tg |
|---|---|
| Ethylene glycol phenyl ether | EPH |
| Diethyleneglycol phenyl ether | DiEPH |

## Experimental Methods

### EXAMPLE 1. Determination of boiling points of coalescent compositions.

Boiling point is defined in directive EU Directive 2004/42/CE as: A volatile organic compound is any organic compound having an initial boiling point of less than or equal to 250 °C measured at a standard pressure of 101.3 kPa. A Herzog distillation device was used because it has the capability to measure initial boiling point on the 5 first % in volume, in addition to measuring the temperature at which the first drops of the material are produced in distillation. This measurement confirmed that a 70/30 wt% of EPH-DiEPH blend has an initial boiling point above 250 °C, as shown in Table 1.1 and therefore qualifies as a zero-VOC coalescent composition.

Table 1.1 Experimentally determined boiling point measurements for EPH/DiEPH blends

| IBP NOT VOC | (Initial Boiling Point MP626 Apparatus Herzog Distillation Experiments) | | | | | | |
|---|---|---|---|---|---|---|---|
| ASTM D1078-5 | Standard test method for Distillation Range of Volatile Organic Liquids | | | | | | |
| Sample | DB | IBP 5 Vol% | DP 95 Vol% | Dist. Range | mbar | Color sample | Color Ovh prod. |
| Blend EPH/diEPH RSMP 3043420 70/30 | 250.4 | 251.6 | 297.2 | 45.6 | 1033 | 3 | 5.6 |
| Blend EPH/diEPH RSMP 3043420 70/30 | 250.1 | 251.8 | 297.3 | 45.5 | 1037 | 3 | 6.1 |
| Blend EPH/diEPH RSMP 3043423 50/50 | 255.7 | 258.0 | 297.7 | 39.7 | 1033 | 2 | 7 |

**EXAMPLE 2. Evaluation of coalescent compositions in an aqueous coating composition.**

Coating compositions were formed by adding 1%, 2% or 3% by weight, based on dry polymer solids, of coalescent composition to UCAR™ Latex DL420G, a commercial styrene/butyl acrylate emulsion polymer under stirring. The mixture was homogenized in a Red Devil mixer and placed under 600 mm Hg vacuum for 30 minutes to extract air bubbles. After 48 hours standing coatings were prepared and evaluated.

The Minimum Film Formation Temperature (MFFT) was measured using a Coesfeld Thermostair MFFT bar according to ASTM D 2354-998.

Wet films of 150$\mu$m were drawn down and hardness development was measured during the course of 8 days as it correlates to the release of the coalescent from the coating film. This measurement was done using Koenig Pendulum Hardness equipment.

Storage stability of the aqueous coating compositions was measured by monitoring the viscosity for 14 and 21 days at room temperature and 50 °C.

Table 2.1 Evaluation of aqueous coating compositions

| Coalescent | Coalescent level | Compatibility Appearance initial | Compatibility Appearance after 24hrs | Brookfield Viscosity #4/20rpm | Clarity / Opacity 150$\mu$m wet | Gloss 20° | Gloss 60° |
|---|---|---|---|---|---|---|---|
| | | | | | on glass | on glass | on glass |
| None | 0% | / | / | 450 | 100.80 | 20.7 | 43.4 |
| | | | | | | | |
| TEXANOL ™ | 1% | ok | ok | 500 | 104.90 | 43.9 | 76.1 |
| | 2% | ok | ok | 500 | 104.19 | 62.2 | 93.7 |
| | 3% | ok | sl. Syneresis | 530 | 104.39 | 70.9 | 101.8 |
| | | | | | | | |
| EPH-DiEPH (50-50) | 1% | ok | ok | 680 | 101.98 | 60.7 | 92.5 |
| | 2% | ok | ok | 1000 | 103.29 | 111.3 | 118.0 |
| | 3% | ok | sl. Syneresis | 2050 | 107.16 | 142.8 | 130.9 |
| EPH-DiEPH (70-30) | 1% | ok | ok | 680 | 99.98 | 85.6 | 104.2 |
| | 2% | ok | ok | 1070 | 102.53 | 112.4 | 119.5 |
| | 3% | ok | sl. Syneresis | 1770 | 108.31 | 143.1 | 132.2 |

Table 2.2 Evaluation of aqueous coating compositions

| Coalescent | Coalescent level | Blocking aft.1 hr @ 50°C | Blocking aft. 24hrs @ conditioning room | MFFT | water resistance @ 150μm wet |
|---|---|---|---|---|---|
| | | on Leneta | on Leneta | | after 7 days drying |
| None | 0% | 2 / 80% | 2 / 60% | 17-18°C | 10min. Sl. Milky / 25min. Milky + soft |
| | | | | | |
| | | | | | |
| TEXANOL™ | 1% | 3 / 0% | 2 / 50% | 13-14°C | 25min sl. Milky + sl. Soft |
| | 2% | 2 / 0% | 1 / 50% | 9-10°C | 20min sl. Milky + sl. Soft |
| | 3% | 1 / 0% | 1 / 50% | 6-7°C | 20min. sl. Milky + sl. Soft |
| | | | | | |
| | | | | | |
| EPH/DiEPH (50:50) | 1% | 2 / 1% | 1 / 80% | 9-10°C | 20min sl. Milky + sl. Soft |
| | 2% | 1 / 10% | 0 can't sep. | 6-7°C | 20min very sl. Milky + sl. Soft |
| | 3% | 0 can't sep. | 0 can't sep. | 3-4°C | 20min very sl. Milky + sl. Soft |
| | | | | | |
| | | | | | |
| EPH/DiEPH (70:30) | 1% | 3 / 0% | 1 / 50% | 10-11°C | 25min sl. Milky + sl. Soft |
| | 2% | 1 / 0% | 0 can't sep. | 6-7°C | 25min very sl. Milky + sl. Soft |
| | 3% | 1 / 1% | 0 can't sep. | 3-4°C | 25min very sl. Milky + sl. Soft |

Table 2.3 Evaluation of aqueous coating compositions

| Hardness @ 150μm wet | | | | | | |
|---|---|---|---|---|---|---|
| Coalescent | Coalescent level | I day | 2 day | 3 day | 4 day | 8 day |
| None | 0% | 44 / 47 | 45 / 46 | 46 / 47 | 46 / 47 | 47 / 47 |
| | | | | | | |
| TEXANOL™ | 1% | 25 / 28 | 26 / 26 | 29 / 29 | 29 / 29 | 32 / 32 |
| | 2% | 16 / 17 | 16 / 16 | 17 / 17 | 17 / 18 | 19 / 19 |
| | 3% | 10 / 11 | 10 / 11 | 11 / 12 | 12 / 12 | 13 / 14 |
| | | | | | | |
| EPH/DiEPH (50:50) | | 18 / 20 | 18 / 19 | 19 / 22 | 19 / 22 | 30 / 31 |
| | | 10 / 10 | 11 / 12 | 15 / 15 | 15 / 15 | 21 / 22 |
| | | 5 / 5 | 5 / 6 | 9 / 10 | 9 / 10 | 13 / 14 |
| | | | | | | |

(continued)

| Hardness @ 150μm wet | | | | | | |
|---|---|---|---|---|---|---|
| Coalescent | Coalescent level | I day | 2 day | 3 day | 4 day | 8 day |
| EPH/DiEPH (70:30) | | 22 / 20 | 22 / 22 | 26 / 27 | 26 / 27 | 32 / 33 |
| | | 13 / 12 | 15 / 14 | 21 / 20 | 21 / 22 | 27 / 27 |
| | | 5 / 6 | 8 / 9 | 13 / 13 | 13 / 14 | 20 / 21 |

The data in Tables 2.1-2.3 demonstrate that coalescent compositions EPH/DiEPH (70:30) and EPH/DiEPH (50:50) function as effective coalescents for an emulsion polymer in aqueous coating compositions of the present invention; they exhibited better film formation efficiency as demonstrated by MFFT data through the concentration range relative to TEXANOL™ coalescent, which enables the use of lower EPH-DiEPH coalescent compositions in aqueous coating compositions.

## EXAMPLE 3. Evaluation of biocidal activity of aqueous coating compositions.

Biocidal activity was measured on bacteria and fungi comparing an aqueous coating composition including UCAR™ Filmer IBT and an aqueous coating composition including EPH/DiEPH (70:30). Both paints were inoculated and the number of survival colonies was monitored by counting the number of colonies growing on an agar plate (tryptic soy agar) after streaking the paint on it with a Q-tip. Biocidal activity was measured using a rating from 0 to 4, as shown in Table 3.1.

Table 3.1 Rating system for biocidal activity

| Plating results | Rating |
|---|---|
| No detectable survival | 0 |
| 1-10 colonies | 1 |
| 11-100 colonies | 2 |
| 101-1000 colonies | 3 |
| > 1000 colonies | 4 |

Table 3.2 Biocidal activity for coalescent compositions

| Coalescent | Innoculum | Cycle 1 | | | | Cycle 4 | | | |
|---|---|---|---|---|---|---|---|---|---|
| | | t=0 | t=1d | t=2d | t=6d | t=0 | t=1d | t=6d | t=13d |
| UCAR™ Filmer IBT | bacteria | 4 | 3 | 1 | 0 | 4 | 3 | 1 | 1 |
| EPH/DiEPH (70:30) | bacteria | 4 | 0 | 0 | 0 | 4 | 0 | 0 | 0 |
| UCAR™ Filmer IBT | fungi | 4 | 4 | 4 | 0 | 4 | 4 | 0 | 0 |
| EPH/DiEPH (70:30) | fungi | 4 | 0 | 0 | 0 | 4 | 1 | 0 | 0 |

EPH/DiEPH (70:30) coalescent composition demonstrated superior biocidal activity relative to the reference coalescent.

## EXAMPLE 4. Evaluation of coalescent composition in an aqueous coating composition.

A waterborne aqueous polymeric dispersion epoxy resin POLYPOX™ IE 7007W and waterborne amine hardener POLYOX™ IH 7013W were mixed in stoichiometric ratio. To each test series were added additional water or coalescent, 5% on solid binder content to achieve mixing solids of ~49%

The test series were applied with a doctor knife, 200 μm wet on glass plates, in a defined time frame (reaction time) between 5 and 300 minutes. The wet samples dried and were stored in a climate room with standard condition of 23 ± 1°C and 50 ± 5% rel. humidity for at least 24h. The MFFT of the composition containing EPH/DiEPH (50:50) is expected to be comparable to the MFFT obtained with DOWANOLTM PPH and lower than the MFFT obtained without coalescent. There was no significant loss of pot life in the presence of EPH/DiEPH (50:50) relative to that when DOWANOLTM PPH was used. Evaluation of drawdowns of the cured formulations showed no loss of gloss as a function of pot life. For the test series the gloss was determined with a gloss meter and geometry of 60°. The results are presented in Table 4.1

Table 4.1. Gloss of aqueous polymeric dispersions (2-pack epoxy system) as a function of time

| time [min.] | POLYPOX™ IH 7013W / POLYPOX™ IE 7007W | added 5% Dowanol™ PPH | added 5% EPH/DiEPH (50:50) |
|---|---|---|---|
| 5 | 156 | 157 | 157 |
| 10 | 156 | 157 | 157 |
| 20 | 155 | 157 | 157 |
| 30 | 148 | 156 | 155 |
| 40 | 130 | 156 | 155 |
| 50 | 35 | 156 | 153 |
| 60 | 30 | 156 | 152 |
| 70 | 25 | 156 | 151 |
| 75 | | 156 | 151 |
| 80 | | 154 | 150 |
| 90 | | 152 | 149 |
| 100 | | 151 | 148 |
| 110 | | 149 | 146 |
| 120 | | 148 | 145 |
| 135 | | 142 | 142 |
| 150 | | 134 | 138 |
| 165 | | 127 | 131 |
| 180 | | 118 | 123 |
| 195 | | 108 | 114 |
| 210 | | 93 | 98 |
| 225 | | 78 | 83 |
| 240 | | 60 | 65 |
| 255 | | 47 | 40 |
| 270 | | 35 | 32 |
| 285 | | 32 | 29 |
| 300 | | 30 | 26 |

A coalescent composition EPH/DiEPH (50:50) in an aqueous coating composition of the present invention significantly prolonged the pot life of waterborne epoxy systems without attrition in gloss, similar to DOWANOL™ PPH, but with the advantage that it is a non-VOC regarding the European Decopaint directive 2004/42/EG.

**Claims**

1. An aqueous coating composition comprising an aqueous polymeric dispersion and from 0.1% to 40% by weight, based on the weight of aqueous polymeric dispersion solids, a coalescent composition;
said coalescent composition comprising
from 20 to 80% by weight, based on the weight of said coalescent composition, alkylene glycol phenyl ether and from 80% to 20% by weight, based on the weight of said coalescent composition, dialkylene glycol phenyl ether; wherein said alkylene is selected from the group consisting of ethylene and propylene and said dialkylene is diethylene when said alkylene is ethylene and said dialkylene is dipropylene when said alkylene is propylene.

2. The aqueous coating composition of claim 1 wherein the coalescent composition comprises from 25 to 60% by weight, based on the weight of said coalescent composition, alkylene glycol phenyl ether and

from 60% to 25% by weight, based on the weight of said coalescent composition, dialkylene glycol phenyl ether.

3. The aqueous coating composition of claim 1 or 2 wherein said aqueous polymeric dispersion has a minimum film formation temperature (MFFT) of from -20°C to 30°C as measured using a Coesfeld Thermostair MFFT bar according to ASTM D 2354-998 and said aqueous coating composition comprises from 0.1% to 5% by weight, based on the weight of aqueous polymeric dispersion solids, said coalescent composition.

4. A method for providing a coating comprising

   (a) forming the aqueous coating composition of claim 1, 2 or 3;
   (b) applying said aqueous coating composition to a substrate; and
   (c) drying, or allowing to dry, said applied aqueous coating composition.

**Patentansprüche**

1. Eine wässrige Beschichtungszusammensetzung, die eine wässrige polymere Dispersion und zu 0,1 Gew.-% bis 40 Gew.-%, bezogen auf das Gewicht der Feststoffe der wässrigen polymeren Dispersion, eine Koaleszenzzusammensetzung beinhaltet; wobei die Koaleszenzzusammensetzung Folgendes beinhaltet:

   zu 20 bis 80 Gew.-%, bezogen auf das Gewicht der Koaleszenzzusammensetzung, Alkylenglykolphenylether und zu 80 Gew.-% bis 20 Gew.-%, bezogen auf das Gewicht der Koaleszenzzusammensetzung, Dialkylenglykolphenylether;
   wobei das Alkylen ausgewählt ist aus der Gruppe, bestehend aus Ethylen und Propylen, und das Dialkylen Diethylen ist, wenn das Alkylen Ethylen ist, und das Dialkylen Dipropylen ist, wenn das Alkylen Propylen ist.

2. Wässrige Beschichtungszusammensetzung gemäß Anspruch 1, wobei die Koaleszenzzusammensetzung Folgendes beinhaltet: zu 25 bis 60 Gew.-%, bezogen auf das Gewicht der Koaleszenzzusammensetzung, Alkylenglykolphenylether, und zu 60 Gew.-% bis 25 Gew.-%, bezogen auf das Gewicht der Koaleszenzzusammensetzung, Dialkylenglykolphenylether.

3. Wässrige Beschichtungszusammensetzung gemäß Anspruch 1 oder 2, wobei die wässrige polymere Dispersion eine Mindestfilmbildungstemperatur (MFT) im Bereich von -20 °C bis 30 °C aufweist, wie unter Verwendung eines Coesfeld-Thermostair-MFT-Geräts nach ASTM D 2354-998 gemessen, und die wässrige Beschichtungszusammensetzung zu 0,1 Gew.-% bis 5 Gew.-%, bezogen auf das Gewicht der Feststoffe der wässrigen polymeren Dispersion, die Koaleszenzzusammensetzung beinhaltet.

4. Ein Verfahren zum Bereitstellen einer Beschichtung, das Folgendes beinhaltet:

   (a) Bilden der wässrigen Beschichtungszusammensetzung gemäß Anspruch 1, 2 oder 3;
   (b) Auftragen der wässrigen Beschichtungszusammensetzung auf ein Substrat; und
   (c) Trocknen oder Trocknenlassen der aufgetragenen wässrigen Beschichtungszusammensetzung.

**Revendications**

1. Une composition de revêtement aqueuse comprenant une dispersion polymère aqueuse et de 0,1 % à 40 % en poids, rapporté au poids de solides de la dispersion polymère aqueuse, d'une composition coalescente ; ladite composition coalescente comprenant de 20 à 80 % en poids, rapporté au poids de ladite composition coalescente, d'éther phénylique de l'alkylène glycol et de 80 à 20 % en poids, rapporté au poids de ladite composition coalescente, d'éther phénylique du dialkylène glycol ; dans laquelle ledit alkylène est sélectionné dans le groupe consistant en l'éthylène et le propylène et ledit dialkylène est le diéthylène lorsque ledit alkylène est l'éthylène et ledit dialkylène est le dipropylène lorsque ledit alkylène est le propylène.

2. La composition de revêtement aqueuse de la revendication 1 dans laquelle la composition coalescente comprend de 25 à 60 % en poids, rapporté au poids de ladite composition coalescente, d'éther phénylique de l'alkylène glycol et de 60 % à 25 % en poids, rapporté au poids de ladite composition coalescente, d'éther phénylique du dialkylène glycol.

3. La composition de revêtement aqueuse de la revendication 1 ou de la revendication 2 dans laquelle ladite dispersion polymère aqueuse a une température minimale de formation de film (TMFF) allant de -20 °C à 30 °C telle que mesurée à l'aide d'un banc de TMFF Coesfeld Thermostair selon l'ASTM D 2354-998
et ladite composition de revêtement aqueuse comprend de 0,1 % à 5 % en poids, rapporté au poids de solides de la dispersion polymère aqueuse, de ladite composition coalescente.

4. Une méthode pour fournir un revêtement comprenant

   (a) la formation de la composition de revêtement aqueuse de la revendication 1, de la revendication 2 ou de la revendication 3 ;
   (b) l'application de ladite composition de revêtement aqueuse sur un substrat ; et
   (c) le séchage de, ou le fait de laisser sécher, ladite composition de revêtement aqueuse appliquée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010130644 A
- US 3806460 A
- US 3829387 A
- US 5186744 A
- US 4384056 A
- US 4539361 A
- US 4325856 A
- US 4654397 A
- US 4814373 A